(19) Europäisches Patentamt
European Patent Office
Office européen des brevets

(11) **EP 3 035 772 B1**

(12) **EUROPEAN PATENT SPECIFICATION**

(45) Date of publication and mention
of the grant of the patent:
**09.08.2017 Bulletin 2017/32**

(51) Int Cl.:
***H05B 6/06*** *(2006.01)*  ***H05B 6/12*** *(2006.01)*

(21) Application number: **14198247.0**

(22) Date of filing: **16.12.2014**

(54) **Induction heating device and method for controlling an induction heating coil**

Induktionsheizvorrichtung und Verfahren zur Steuerung einer Induktionsheizspule

Dispositif de chauffage par induction et procédé de commande d'une bobine de chauffage par induction

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2016 Bulletin 2016/25**

(73) Proprietor: **E.G.O. Elektro-Gerätebau GmbH**
**75038 Oberderdingen (DE)**

(72) Inventors:
• **Dalaker, Timo**
**75038 Oberderdingen (DE)**

• **Egenter, Christian**
**75015 Bretten (DE)**
• **Lomp, Stephane**
**75038 Oberderdingen (DE)**

(74) Representative: **Patentanwälte**
**Ruff, Wilhelm, Beier, Dauster & Partner mbB**
**Kronenstraße 30**
**70174 Stuttgart (DE)**

(56) References cited:
**EP-A1- 1 916 876    EP-A1- 2 312 908**
**DE-A1- 4 142 872    DE-U1- 7 737 613**

## Description

### Field of application and prior art

The invention relates to an induction heating device for an induction cooking hob as well as to a method for controlling an induction heating coil of such an induction heating device.

It is known for example from EP 1916876 A1 to arrange a number of rectangular induction coils next to each other to obtain a cooking area for an induction cooking hob with variable size for differently sized pots. Although the number of induction heating coils can be adapted according to a sufficient covering by the pot to be heated, an automatic detection of the pot size and the exact pot location over one or several of the induction heating coils is difficult.

It is known from EP 2312908 A1 to provide a cooking hob with a plurality of smaller induction heating coils, wherein an additional number of even smaller pot sensors is provided to detect the presence or location of a pot on the cooking hob.

It is known from DE 7737613 U1 to provide a cooking hob with an induction heating device having at least one induction heating coil. This induction heating coil is divided in two subcoils in the form of an "8" with two electrical connections to the outside.

It is further known from DE 4142872 A1 to provide an induction heating device for an induction cooking hob with an induction heating coil being divided into two subcoils. One of the subcoils is an inner subcoil and the other is, in concentric arrangement, an outer subcoil. Both subcoils have the same direction of winding.

### Object and solution

It is an object of the invention to provide an induction heating device as well as a method for controlling an induction heating coil of it, with which disadvantages of the prior art can be avoided and with which it is possible to locate a pot and/or detect a pot size in a better way.

This object is achieved by an induction heating device with the features of claim 1 as well as a method for controlling an induction heating coil of such an induction heating device with the features of claim 14. Advantageous and preferred embodiments of the invention are defined in the further claims and are described in more detail in the following. Some of the features are only described with reference to the induction heating device or with reference to the controlling method. These features shall nevertheless be applicable to the induction heating device as well as to the controlling method in independent manner. The content of the claims is made an integral part of the description by explicit reference.

It is provided that the induction heating device for an induction cooking hob has at least one induction heating coil, preferably a plurality of induction heating coils, for example four to eight induction heating coils.

The induction heating coil is wound and subdivided into at least two subcoils, which are arranged directly next to each other and in the same plane. The two subcoils, preferably all subcoils of one induction heating coil, advantageously have similar size and similar outer form, preferably the same size and the same outer form. The subcoils are wound in the same way or pattern, that means that they may be wound beginning from an innermost winding to the outside to an outermost winding. The outermost winding of a first subcoil continues or goes directly into the outermost winding of a second subcoil. That means that the induction heating coil as a whole is wound at first from the innermost winding of the first subcoil to its outermost winding. This outermost winding of the first subcoil goes directly into the outermost winding of the second subcoil, which is then wound again inwardly up to the innermost winding. This winding may also be the other way around, beginning at the outermost winding of the first subcoil. However, the transition between two outermost windings is much more direct and easier than between two innermost windings.

In the case of more than two subcoils the next subcoil or pair of subcoils is then again connected to the first pair of subcoils described before, that is to one of their winding ends.

A power supply for the induction heating coil is preferably connected to each innermost winding of the subcoils. A middle connection is provided, which is connected to the induction heating coil at one of its outermost windings or one of the outermost windings of the subcoils, respectively. Alternatively, the middle connection may be connected to a connection between two innermost windings of two subcoils. This middle connection is connected to the outside to a measurement device of the induction heating device, which can also be provided with several switching devices that can be used to support the measurement device.

In short words, an induction heating coil which would normally be one single and integral induction heating coil is subdivided into at least two subcoils, which cover the same area and have about the same size as the one induction heating coil. The induction heating coil with its subcoils is connected to a power supply in an essentially conventional way, and in the heating mode the subcoils are operated as one single and integral coil, which preferably is the only heating operating mode for the induction heating coil. However, by providing the middle connection it is possible to operate the subcoils independently not in this heating mode, but in a measuring mode.

Preferably, the number of subcoils is an even number, more preferably two subcoils or at most four subcoils.

A power supply for the induction heating coil or its subcoils, respectively, may be connected to the innermost windings of the subcoils, at least if there is an even number of subcoils.

In a preferred embodiment of the invention, the middle connection is connected to the induction heating coil or its subcoils in a connection region where the outermost windings or where the innermost windings of the subcoils continue or go into each other. Even more preferably, the middle connection is connected to the coil wire in the middle between the two subcoils. This may not only be the middle of the length of coil wire, but also a middle or center point of the subcoils with regard to their combined area or combined size as the induction heating coil.

The subcoils are advantageously in flat form and have their coil windings of coil wire in only one single and in the same plane. This way, the induction heating coil can be manufactured rather flat as is common in the prior art.

The subcoils can be provided with ferritic elements for concentrating and directing a magnetic fluxus. The ferritic elements may be arranged at the subcoils as if they were each an independently operated single induction heating coil.

The coils windings may be made up of multifiber wire as coil wire. Preferably, the coil wire or wire of the outermost winding of one subcoil goes continuously and without interruption into the outermost winding of another subcoil. This means that the subcoils or the induction heating coil itself are wound from one and the same continuous coil wire.

The direction of rotation of the coil windings in a first subcoil is opposite to the direction of rotation of the windings in a second subcoil. This is made for the reason that in the neighbouring region of both these subcoils with each other, the direction of the windings or the coil wire, respectively, should be the same. Otherwise the magnetic fields generated in this neighbouring region would largely neutralize each other for this induction heating coil, which should obviously be avoided.

In an embodiment of the invention, the subcoils can have a substantially rectangular form, which may be a square form. In a preferred embodiment of the invention, the subcoils are substantially rectangular with longer lateral sides and shorter lateral sides. The longer lateral sides can be between 10% and 15% longer than the shorter lateral sides. The subcoils are neighbouring each other preferably with their longer lateral sides. In a particularly preferred embodiment of the invention, the ratio of length of the shorter lateral side to the longer lateral side of a subcoil is the same as of the complete induction heating coil.

It is advantageous if the subcoils have the same number of windings and/or the same length of coil wire. In this case, their electric properties are the same and they are in some way balanced with each other in a way that the complete induction heating coil is divided exactly in two or a higher number by the division into these subcoils. The middle connection to an outermost winding may be provided in the connection region between two subcoils in a center of the induction heating coil. In an alternative embodiment the middle connection to the outermost winding is provided in a region more easily accessible, which may be a corner region of one of the subcoils with a distance of one or two centimeters to the other subcoil.

It is possible that the construction and the arrangement of the subcoils with the exception of the outermost winding in the connection region, preferably also with the exception of the innermost winding of the subcoils, is essentially symmetrical to an axis that runs along and between their neighbouring lateral sides.

Alternatively, two subcoils may be symmetrical to a point in the center of the induction heating coil, which is between the neighbouring lateral sides of the subcoils. Such a point symmetry provides for a better combined efficiency of the induction heating coil.

In a preferred embodiment of the invention, the subcoils are connected to one single converter for power supply. Even more preferably, when the induction heating coil is used for heating a pot placed on it, at least in a heating mode all the subcoils are powered and are operating as one induction heating coil.

Furthermore, it is possible to provide, by means of the middle connection, a switch in parallel to each of the subcoils, which means that the number of switches provided is the same as the number of subcoils. These switches can be used for independently short-circuiting each of the subcoils, which allows for the other subcoil or subcoils to be functional and to be operated on their own, preferably for measuring purposes.

According to the invention, the middle connection serves to provide voltage measuring means parallel to each of the subcoils, which means that the voltage measuring means are connected to the middle connection and to each of the outer connections of the subcoils connected to their innermost windings. Conventional voltage measuring devices may be used.

The switches mentioned before may be used in a method for controlling such an induction heating coil as described before with its subcoils to measure a damping factor of each of the subcoils. One subcoil is short-circuited in such a measuring mode, which allows for measuring the voltage over the other subcoils. Furthermore, is possible to provide voltage measuring devices not only over the complete induction heating coil, but also over all the subcoils via the middle connection. In this way, the distribution of main voltage according to the resistance of each subcoil can be measured. The measuring of the damping factor of each subcoil allows to characterize the pot material. The reason for this is that, as will be explained in more detail hereinafter, the damping factor of the induction coil that is caused by the pot gives the equation of an exponentially decaying sinusoid. With this damping factor, it is possible to detect the physical parameters of the pot, which is the material of the pot, as well as the percentage of the induction heating coil or its subcoils, respectively, being covered by the pot. By comparing the percentage of covering of each of the subcoils with each other, it is possible to detect whether the pot is placed more over the one if the subcoil than over the others. Furthermore, it is possible to detect whether the pot has been moved over the induction heating coil, for example to cover a larger part of one subcoil and only a minor part of the other subcoil.

**Short description of the drawings**

Embodiments of the invention are depicted in the drawings and are described hereinafter in greater details. In the drawings show:

fig. 1      an oblique view onto an induction heating coil of an induction heating device being subdivided into two subcoils according to the invention,

fig. 2 and 3      a schematic diagram of an equivalent circuit of the induction coil of fig. 1 with switches and voltage meters,

fig. 4      the measuring of the damping factor of the subcoils according to fig. 2,

fig. 5      two alternative locations of a pot on one of the subcoils according to fig. 1 and

fig. 6      the pot of fig. 5 placed centrally above the induction heating coil.

**Detailed description of the embodiments**

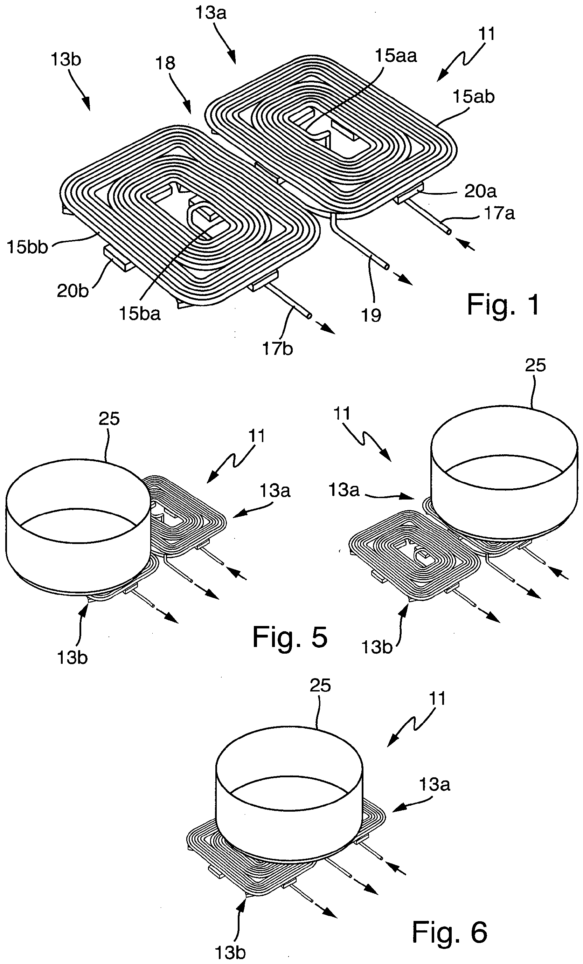

In fig. 1, an induction heating coil 11 is shown, which can be used in an induction heating device according to the invention. The induction heating coil 11 is subdivided into two subcoils or half coils, respectively, that is half coil 13a on the right side and half coil 13b on the left side. Each of the half coils 13a and 13b is made up of several coil windings 15 of conventional coil wire. Both half coils 13a and 13b have thirteen coil windings 15. In both half coils 13a and 13b, the inner seven coil windings 15 have a slightly different form of their corner regions of the rectangular form then the outer six coil windings 15.

Furthermore, it can be seen that both half coils 13a and 13b are wound in a way that they start at an innermost winding 15aa and 15ba, respectively. Half coil 13a is, beginning at the innermost coil winding 15aa, wound in a clock-wise direction such that it has its rectangular outer shape. The radius of the coil windings 15 and especially of the outermost coil winding 15ab in the corner region is provided for easier manufacturing and better handling of the coil wire. It can also been seen that both half coils 13a and 13b are neighbouring each other with their longer lateral sides in a connection region 18. In this connection region 18 or rather at the front corner of half coil 13a, the outermost winding 15ab separates from the half coil 13a and continues to half coil 13b, forming its outermost winding 15bb. The coil wire of coil windings 15 of the left half coil 13b then is wound in an anti clock-wise direction to the innermost winding 15ba. Electrical connections 17a and 17b are connected to both innermost windings 15aa and 15ba. This sense of winding direction of the coil windings 15 provides that in the connection region 18 the coil windings 15 and the current in it have the same direction to avoid a negative impact on the magnetic field generated by this current.

Several ferritic elements 20a and 20b are provided underneath coil windings 15 as is known in the art.

A middle connection 19 is connected to the coil wire in the connection region 18 where the outermost winding 15ab of the right half coil 13a separates from this half coil and is on its way to form the outermost winding 15bb of left half coil 13b. Middle connection 19 is preferably a wire. Its mechanical and electrical connection to the coil wire may be by clamping or pressing, soldering or welding.

The view of induction heating coil 11 also shows that, with the exception of the electrical connection 17 and the middle connection 19 as well as the form and course of the outer windings 15aa and 15bb, both half coils 13a and 13b are symmetric to a point at the middle along the longer lateral sides of half coils 13a and 13b in the connection region 18. This provides for current to run in the same direction in the neighbouring region between both half coils 13a and 13b.

In an above described preferred mode, the induction heating coil 11 with its two half coils 13a and 13b is wound from one continuous coil wire, for example as described before and along the arrows indicated at the electrical connections 17a and 17b. In an alternative and for ease of manufacture, both half coils 13a and 13b can be manufactured separately and in identical form. They are placed next to each other and their outer windings 15ab and 15bb are then connected to each other electrically, preferably either by a plug connection or in a non-detachable manner, for example by soldering, welding or the like.

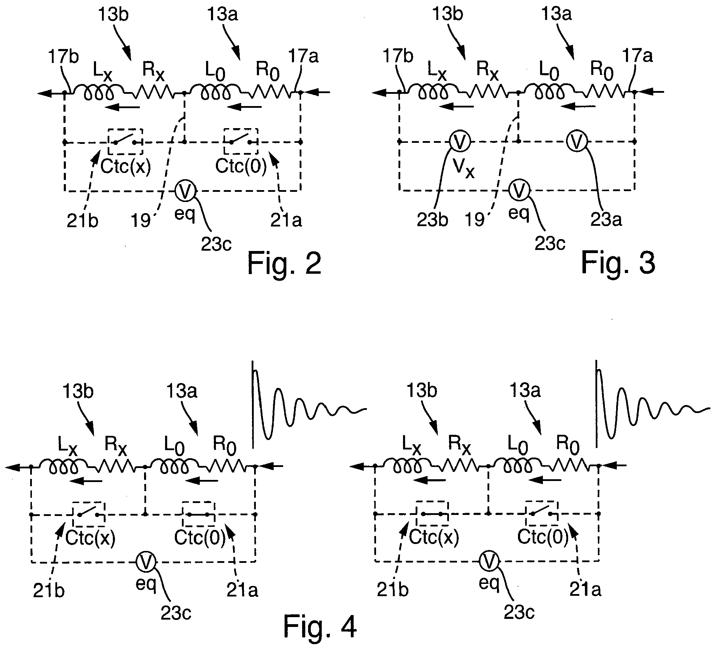

In fig. 2, a schematic equivalent circuit of the induction heating coil 11 with its two half coils 13a and 13b is shown. The equivalent to a half coil 13 is a series connection of a resistor R and an inductivity L. For half coil 13a it is $R_0$ and $L_0$, and for half coil 13b it is $R_x$ and $L_x$. They are connected in series with electrical connections 17a and 17b. There are also provided the middle connection 19 and switches 21 a and 21 b in parallel to each of the half coils 13a and 13b. These switches can be controlled by a control of the induction heating device or of the induction cooking hob which is not displayed here but can easily be imagined. The switches may be magnetic relays or electronic power switches such as IGBT or the like.

There is also provided a voltage meter 23c as a voltage measuring means described above. Voltage meter 23c is connected to the electrical connections 17a and 17b for measuring the total voltage applied to the induction heating coil 11. This arrangement serves for measuring the damping factor of the half coils 13a and 13b.

A distribution of the main voltage over both half coils 13a and 13b of the induction coil 11 is shown in fig. 3. A first meter 23a is provided in parallel to the first half coil 13a, wherein a second voltage meter 23b is provided in parallel to the second half coil 13b.

With the arrangement of two half coils 13a and 13b according to fig. 2, the damping factor can be calculated as

$$X = e^{-rt} a \cos[\omega_1 t - \alpha]$$

With the arrangement of fig. 3, the voltage at voltage meter 23b can be calculated as

$$V_X = V_{R0} \frac{I R_{Rx}}{I(R_{R0} + R_{Rx})} = \frac{V_{R0} R_{Rx}}{(R_{R0} + R_{Rx})}$$

As voltage $V_x$ can also be measured by voltage meter 23b, the voltage over each of the resistors $R_0$ and $R_x$ and over each of the half coils can be calculated. With more than two subcoils this calculation would be more complex. However, it is still feasible.

In fig. 4, it is shown how the damping factor impacts the voltage over time. For measuring the damping factor of second half coil 13b, switch 21 a is closed and only the second half coil 13b is connected to the power supply via middle connection 19 and electrical connection 17b, as is shown on the left hand side. The voltage is then measured by the voltage meter 23c.

On the right hand side of fig. 4, it is shown that switch 21 a is open and switch 21b is closed. This is made for a measuring of the damping factor of first half coil 13a, which damping factor can be seen in the diagram of voltage over time.

Three possible and basic constellations of a pot 25 placed on the induction heating coil 11 are shown in fig. 5 and 6. On the left side in fig. 5, pot 25 is placed only above the second half coil 13b and not above the first half coil 13a. In this case the resistance of half coil 13b is substantially greater than the resistance of half coil 13a. On the right side in fig. 5, pot 25 is fully over the first half coil 13a and does not cover half coil 13b to any extent.

This difference of coil coverage creates the imbalance in the voltage, which again is proportional to the ratio of pot covering on both half coils 13a and 13b. So in return from a comparison of the resistances of the half coils or their measured voltages, respectively, the covering of both half coils 13a and 13b with a pot 25 can be detected. This will then also allow to detect if pot 25 is, for example, with one third of its area placed over first half coil 13a and with the other two thirds over second half coil 13b.

In fig. 6, the case is shown where the pot 25 is placed centrally over both half coils 13a and 13b or over the induction coil 11, respectively. In this case, their resistances are balanced and the coil voltages are also balanced. This is because both half coils have the same degree of coverage by pot 25.

As shown before, the concept of the invention allows for precise location of a pot on an induction heating coil being divided in two half coils 13. In addition, it is possible to measure the degree of covering of each half coil as a function of balancing the voltages measured over each half coil.

To distinguish the case of fig. 6 with one larger pot 25 placed centrally on the induction heating coil 11 from the case where two smaller pots of the same size are placed for example centrally over each of the half coils 13a and 13b, additional pot detectors or pot sensors are as are described in EP 2312908 A1. Such additional pot detectors can have the form of smaller inductive sensors or light senders and light receivers.

To imagine the case where the induction heating coil is divided into more than two subcoils, for example four subcoils, one can take fig. 1 and connect to the electrical connections 17a and 17b another two subcoils. These would be arranged directly above where in fig. 1 these electrical connections 17 are shown, and would preferably be of the same size and shape of the other subcoils 13a and 13b. The electrical connections 17a and 17b from the innermost windings of the subcoils 13a and 13b would then be connected to the innermost windings of these additional subcoils. Electrical connections to a power supply or the like would then be from their outermost windings. Furthermore, middle connections would also be provided to these electrical connections 17a and 17b in the same manner as middle connection 19. The whole induction heating coil would then comprise four subcoils of the same size and three middle connections. These middle connections would then again be connected to switches for short-circuiting all of the subcoils except for one that is used for detecting whether a pot is placed above it.

## Claims

1. Induction heating device for an induction cooking hob, wherein the induction heating device has at least one induction heating coil (11), wherein the induction heating coil is wound and subdivided into at least two subcoils (13a, 13b) arranged directly next to each other and in the same plane, wherein all subcoils are wound from an innermost winding (15aa, 15ba) to the outside to an outermost winding (15ab, 15bb), wherein an outermost winding (15ab) of one subcoil (13a) continues into an outermost winding (15bb) of another subcoil (13b), **characterized in that**

- a middle connection (19) is provided being connected to the induction heating coil (11) between two of the subcoils (13a, 13b),
- the middle connection (19) is to the outside to a measurement device of the induction heating device,
- voltage measuring means (23) are provided in parallel to each of the subcoils (13a, 13b).

2. Induction heating device according to claim 1, wherein the induction heating coil (11) is subdivided into an even number of subcoils (13a, 13b), preferably into two or four subcoils.

3. Induction heating device according to claim 1 or 2, wherein a power supply for the induction heating coil (11) is connected to innermost windings (15aa, 15ba) of the subcoils (13a, 13b).

4. Induction heating device according to one of the preceding claims, wherein the middle connection (19) is connected to the induction heating coil (11) in a connection region where the windings (15ab, 15bb) of two subcoils (13a, 13b) are connected with each other, preferably in the middle between the subcoils.

5. Induction heating device according to one of the preceding claims, wherein the subcoils (13a, 13b) are flat with coil windings in only one single and the same plane.

6. Induction heating device according to one of the preceding claims, wherein the coil windings are made up of multifiber wire and the wire of an outermost winding (15ab) of one first subcoil (13a) goes continuously without interruption into an outermost winding (15bb) of a second subcoil (13).

7. Induction heating device according to claim 6, wherein the direction of rotation of the windings in a first subcoil (13a) is opposite to the direction of rotation of the windings in a second subcoil (13b).

8. Induction heating device according to one of the preceding claims, wherein the subcoils (13a, 13b) are substantially rectangular, in particular with longer lateral sides and shorter lateral sides, wherein two subcoils (13a, 13b) are neighbouring each other with their longer lateral sides and wherein preferably another two subcoils (13a, 13b) as a neighbouring pair with their longer lateral sides neighbouring each other are arranged close to them with their shorter lateral sides neighbouring to the other pair.

9. Induction heating device according to one of the preceding claims, wherein two, preferably all, of the subcoils (13a, 13b) have the same number of windings and/or the same length of coil wire, wherein these subcoils (13a, 13b) have the same size and the same outer form.

10. Induction heating device according to one of the preceding claims, wherein the construction and the arrangement of two neighbouring subcoils (13a, 13b) with the exception of the outermost winding (15ab, 15bb) in the connection region is essentially symmetrical to an axis along and between their neighbouring lateral sides.

11. Induction heating device according to one of the claims 1 to 9, wherein the construction and the arrangement of two neighbouring subcoils (13a, 13b) with the exception of the outermost winding (15ab, 15bb) in the connection region is essentially symmetrical to a point in the center of the induction heating coil (11) and between the neighbouring lateral sides of the subcoils (13a, 13b).

12. Induction heating device according to one of the preceding claims, wherein all the subcoils (13a, 13b) of the induction heating coil (11) are connected to one single converter for power supply.

13. Induction heating device according to one of the preceding claims, wherein, by means of the middle connection (19), a switch (21 a, 21 b) is provided in parallel to each of the subcoils (13a, 13b) connected to this middle connection for independently short-circuiting of each of the subcoils.

14. Method for controlling an induction heating coil (11) of an induction heating device according to one of the preceding claims, wherein a damping factor of one subcoil (13a, 13b) is measured by short-circuiting the other subcoils (13b, 13a) of this induction heating coil (11), and wherein the voltage is measured over each of the subcoils (13a, 13b).

**Patentansprüche**

1. Induktionsheizeinrichtung für ein Induktionskochfeld, wobei die Induktionsheizeinrichtung mindestens eine Induktionsheizspule (11) aufweist, wobei die Induktionsheizspule in mindestens zwei Teilspulen (13a, 13b) gewickelt und unterteilt ist, die direkt nebeneinander und in derselben Ebene angeordnet sind, wobei alle Teilspulen von einer innersten Wicklung (15aa, 15ba) zur Außenseite einer äußersten Wicklung (15ab, 15bb) gewickelt sind, wobei eine äußerste Wicklung (15ab) einer Teilspule (13a) in eine äußerste Wicklung (15bb) einer weiteren Teilspule (13b) übergeht,
**dadurch gekennzeichnet, dass**

- ein Mittelabgriff (19) vorgesehen ist, der zwischen zwei der Teilspulen (13a, 13b) mit der Induktionsheizspule (11) verbunden ist,
- der Mittelabgriff (19) zur Außenseite einer Messvorrichtung der Induktionsheizeinrichtung führt,
- Spannungsmessmittel (23) parallel zu jeder der Teilspulen (13a, 13b) vorgesehen sind.

2. Induktionsheizeinrichtung nach Anspruch 1, wobei die Induktionsheizspule (11) in eine gerade Anzahl von Teilspulen (13a, 13b), bevorzugt in zwei oder vier Teilspulen, unterteilt ist.

3. Induktionsheizeinrichtung nach Anspruch 1 oder 2, wobei eine Energieversorgung für die Induktionsheizspule (11) mit innersten Wicklungen (15aa, 15ba) der Teilspulen (13a, 13b) verbunden ist.

4. Induktionsheizeinrichtung nach einem der vorhergehenden Ansprüche, wobei der Mittelabgriff (19) mit der Induktionsheizspule (11) in einem Verbindungsbereich verbunden ist, in dem die Wicklungen (15ab, 15bb) der beiden Teilspulen (13a, 13b) miteinander verbunden sind, bevorzugt in der Mitte zwischen den Teilspulen.

5. Induktionsheizeinrichtung nach einem der vorhergehenden Ansprüche, wobei die Teilspulen (13a, 13b) flach ausgebildet sind und Spulenwicklungen in nur einer und derselben Ebene aufweisen.

6. Induktionsheizeinrichtung nach einem der vorhergehenden Ansprüche, wobei die Spulenwicklungen aus einem Mehrfachdraht hergestellt sind und der Draht einer äußersten Wicklung (15ab) einer ersten Teilspule (13a) ohne Unterbrechung in eine äußerste Wicklung (15bb) einer zweiten Teilspule (13) übergeht.

7. Induktionsheizeinrichtung nach Anspruch 6, wobei die Drehrichtung der Wicklungen in einer ersten Teilspule (13a) der Drehrichtung der Wicklungen in einer zweiten Teilspule (13b) entgegengerichtet ist.

8. Induktionsheizeinrichtung nach einem der vorhergehenden Ansprüche, wobei die Teilspulen (13a, 13b) im Wesentlichen rechtwinklig ausgebildet sind, insbesondere mit längeren Seiten und kürzeren Seiten, wobei zwei Teilspulen (13a, 13b) mit ihren längeren Seiten aneinandergrenzen, und wobei bevorzugt weitere zwei Teilspulen (13a, 13b) als Nachbarpaar, die mit ihren längeren Seiten aneinandergrenzen, nahe daneben angeordnet sind, wobei ihre kürzeren Seiten an das andere Paar angrenzen.

9. Induktionsheizeinrichtung nach einem der vorhergehenden Ansprüche, wobei zwei, bevorzugt alle, der Teilspulen (13a, 13b) die gleiche Anzahl an Wicklungen und/oder die gleiche Länge an Spulendraht aufweisen, wobei diese Teilspulen (13a, 13b) die gleiche Größe und die gleiche äußere Form aufweisen.

10. Induktionsheizeinrichtung nach einem der vorhergehenden Ansprüche, wobei die Konstruktion und die Anordnung der beiden benachbarten Teilspulen (13a, 13b) mit Ausnahme der äußersten Wicklung (15ab, 15bb) im Verbindungsbereich im Wesentlichen symmetrisch zu einer Achse entlang und zwischen ihren benachbarten Seiten ausgebildet sind.

11. Induktionsheizeinrichtung nach einem der Ansprüche 1 bis 9, wobei die Konstruktion und die Anordnung der beiden benachbarten Teilspulen (13a, 13b) mit Ausnahme der äußersten Wicklung (15ab, 15bb) im Verbindungsbereich im Wesentlichen symmetrisch zu einem Mittelpunkt der Induktionsheizspule (11) und zwischen den benachbarten Seiten der Teilspulen (13a, 13b) ausgebildet sind.

12. Induktionsheizeinrichtung nach einem der vorhergehenden Ansprüche, wobei alle Teilspulen (13a, 13b) der Induktionsheizspule (11) mit einem einzigen Wandler für die Energieversorgung verbunden sind.

13. Induktionsheizeinrichtung nach einem der vorhergehenden Ansprüche, wobei mittels des Mittelabgriffs (19) ein Schalter (21 a, 21 b) jeweils parallel zu den Teilspulen (13a, 13b) vorgesehen ist, der mit diesem Mittelabgriff verbunden ist, so dass jede der Teilspulen unabhängig kurzgeschlossen werden kann.

14. Verfahren zur Steuerung einer Induktionsheizspule (11) einer Induktionsheizeinrichtung nach einem der vorhergehenden Ansprüche, wobei ein Dämpfungsfaktor einer Teilspule (13a, 13b) durch Kurzschließen der anderen Teilspulen (13a, 13b) dieser Induktionsheizspule (11) gemessen wird, und wobei die Spannung über jede der Teilspulen (13a, 13b) gemessen wird.

**Revendications**

1. Dispositif de chauffage par induction pour une plaque de cuisson à induction, le dispositif de chauffage par induction ayant au moins une bobine de chauffage par induction (11), la bobine de chauffage par induction étant enroulée et subdivisée en au moins deux sous-bobines (13a, 13b) disposées juste à côté l'une de l'autre et dans le même plan, toutes les sous-bobines étant enroulées depuis un enroulement intérieur (15aa, 15ba) vers l'extérieur jusqu'à un enroulement extérieur (15ab, 15bb), un enroulement extérieur (15ab) d'une sous-bobine (13a) se poursuivant en un enroulement extérieur (15bb) d'une autre sous-bobine (13b),
**caractérisé en ce que**

- un raccordement moyen (19) raccordé à la bobine de chauffage par induction (11) est disposé entre deux des sous-bobines (13a, 13b),
- le raccordement moyen (19) se fait avec l'extérieur d'un dispositif de mesure du dispositif de chauffage par induction,
- des moyens de mesure de tension (23) sont disposés en parallèle avec chacune des sous-bobines (13a, 13b).

2. Dispositif de chauffage par induction selon la revendication 1, dans lequel la bobine de chauffage par induction (11) est subdivisée en un nombre pair de sous-bobines (13a, 13b), de préférence en deux ou quatre sous-bobines.

3. Dispositif de chauffage par induction selon la revendication 1 ou 2, dans lequel une alimentation pour la bobine de chauffage par induction (11) est raccordée aux enroulements intérieurs (15aa, 15ba) des sous-bobines (13a, 13b).

4. Dispositif de chauffage par induction selon une des revendications précédentes, dans lequel le raccordement moyen (19) est raccordé à la bobine de chauffage par induction (11) dans une région de raccordement où les enroulements (15ab, 15bb) de deux sous-bobines (13a, 13b) sont raccordés l'un à l'autre, de préférence au centre entre les sous-bobines.

5. Dispositif de chauffage par induction selon une des revendications précédentes, dans lequel les sous-bobines (13a, 13b) sont plates avec des enroulements de bobine dans un seul et même plan.

6. Dispositif de chauffage par induction selon une des revendications précédentes, dans lequel les enroulements de bobine sont constitués d'un fil multifibre et le fil d'un enroulement extérieur (15ab) d'une première sous-bobine (13a) va de façon continue sans interruption jusqu'à l'intérieur d'un enroulement extérieur (15bb) d'une deuxième sous-bobine (13).

7. Dispositif de chauffage par induction selon la revendication 6, dans lequel la direction de rotation des enroulements dans une première sous-bobine (13a) est opposée à la direction de rotation des enroulements dans une deuxième sous-bobine (13b).

8. Dispositif de chauffage par induction selon une des revendications précédentes, dans lequel les sous-bobines (13a, 13b) sont sensiblement rectangulaires, en particulier avec des côtés latéraux plus longs et des côtés latéraux plus courts, dans lequel deux sous-bobines (13a, 13b) sont voisines l'une de l'autre avec leurs côtés latéraux plus longs et dans lequel de préférence deux autres sous-bobines (13a, 13b) en tant que paire voisine avec leurs côtés latéraux plus longs voisins l'un de l'autre sont disposées près d'elles avec leurs côtés latéraux plus courts voisins de l'autre paire.

9. Dispositif de chauffage par induction selon une des revendications précédentes, dans lequel deux, de préférence toutes les sous-bobines (13a, 13b) ont le même nombre d'enroulements et/ou la même longueur de fil de bobine, ces sous-bobines (13a, 13b) ayant la même taille et la même forme extérieure.

10. Dispositif de chauffage par induction selon une des revendications précédentes, dans lequel la construction et l'agencement de deux sous-bobines voisines (13a, 13b) à l'exception de l'enroulement extérieur (15ab, 15bb) dans la région de raccordement sont essentiellement symétriques par rapport à un axe le long de et entre leurs côtés latéraux voisins.

11. Dispositif de chauffage par induction selon une des revendications 1 à 9, dans lequel la construction et l'agencement de deux sous-bobines voisines (13a, 13b) à l'exception de l'enroulement extérieur (15ab, 15bb) dans la région de raccordement sont essentiellement symétriques par rapport à un point au centre de la bobine de chauffage par induction (11) et entre les côtés latéraux voisins des sous-bobines (13a, 13b).

12. Dispositif de chauffage par induction selon une des revendications précédentes, dans lequel toutes les sous-bobines (13a, 13b) de la bobine de chauffage par induction (11) sont raccordées à un seul convertisseur pour l'alimentation.

13. Dispositif de chauffage par induction selon une des revendications précédentes, dans lequel au moyen du raccordement moyen (19), un commutateur (21a, 21b) est disposé en parallèle avec chacune des sous-bobines (13a, 13b) raccordées à ce raccordement moyen pour court-circuiter de façon indépendante chacune des sous-bobines.

14. Procédé de contrôle d'une bobine de chauffage par induction (11) d'un dispositif de chauffage par induction selon une des revendications précédentes, dans lequel un facteur d'amortissement d'une sous-bobine (13a, 13b) est mesuré en court-circuitant les autres sous-bobines (13a, 13b) de cette bobine de chauffage par induction (11), et dans lequel la tension est mesurée aux bornes de chacune des sous-bobines (13a, 13b).

Fig. 1

Fig. 5

Fig. 6

Fig. 2

Fig. 3

Fig. 4

EP 3 035 772 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1916876 A1
- EP 2312908 A1
- DE 7737613 U1
- DE 4142872 A1